# FASCICULE DE BREVET EUROPEEN

(11) **EP 1 512 895 B1**
(45) Date de publication et mention de la délivrance du brevet: **11.03.2009**
(21) Numéro de dépôt: 04300557.8
(22) Date de dépôt: 26.08.2004
(51) Int. Cl.: F16K 35/00, F16L 37/08

(54) **Robinet-détendeur intégré avec moyens de blocage de l'organe d'actionnement**
Integriertes Entspannungsventil mit Vorrichtung zum Sperren des Stellgliedes
Integrated expansion valve with means for locking the actuator

(30) Priorité: 03.09.2003 FR 0350495
(43) Date de publication de la demande: 09.03.2005
(73) Titulaire: TAEMA, F-92182 Antony Cédex (FR)
(72) Inventeur: Bleys, Christian, 77000 Livry sur Seine (FR); Rudnianyn, Philippe, 91310 Longpont sur Orge (FR); Collado, Pedro, 77330 Ozoir la-Ferriere (FR)
(74) Mandataire: Pittis, Olivier

(56) Documents cités:
- DE-A- 2 355 950
- FR-A- 1 550 319
- GB-A- 867 642
- GB-A- 1 425 891

## Description

La présente invention concerne un ensemble robinet à détendeur intégré, ainsi qu'un équipement de déambulation comprenant un tel ensemble robinet à détendeur intégré monté sur une petite bouteille de gaz comprimé dont l'ouverture et l'utilisation ne sont possibles que si un appareil d'utilisation pour délivrer du gaz, tel qu'un débitmètre, une valve respiratoire, un outil d'ouverture nécessaire pour effectuer la purge de la bouteille ou tout autre appareil utilisant le gaz, y est connecté via une interface spécifique de connexion permettant de libérer un verrou bloquant la rotation de l'organe de manipulation du robinet commandant l'ouverture du gaz et sa libération.

Il existe actuellement des équipements de déambulation qui utilisent des sources de gaz comprimé ou d'oxygène liquide.

Les sources d'oxygène liquide sont généralement de plus petite taille et ont une autonomie supérieure qui est souvent surdimensionnée pour les déambulations de proximité.

Toutefois, l'utilisation d'oxygène liquide n'est pas idéale car l'évaporation du liquide engendre des pertes de gaz et recourir à de l'oxygène liquide n'est pas avantageux, compte tenu de son prix, lorsque la déambulation du patient est de courte durée.

Par ailleurs, les équipements existant faisant appel à une source de gaz comprimé sont peu pratiques, encombrants et souvent trop lourds pour les patients ayant recours à ce type de traitement puisque ceux-ci sont souvent des personnes âgées ou affaiblies.

De plus, l'utilisation de tels équipements nécessite l'emploi de régulateurs de pression dont l'interface avec la bouteille est soumise à des pressions très élevées, c'est-à-dire de l'ordre de 200 bar, ce qui requiert une mise en oeuvre pénible et délicate pour l'utilisateur, n'est pas sans danger, en particulier en cas de mauvaise connexion, d'entretien insuffisant ou de présence involontaire de particules grasses sur les zones soumises à la haute pression.

Par ailleurs, l'utilisation de ces sources s'effectue généralement soit avec débitmètres, soit des valves à la demande à commande électronique ou de valves à commande pneumatique.

Or, les valves à commande électronique nécessitent une énergie supplémentaire fournie par une pile ou des accumulateurs, qui doit être disponible au moment de l'utilisation, ce qui n'est pas toujours le cas.

Les valves à commande pneumatique utilisent, quant à elles, l'énergie du gaz stocké pour l'ouverture principale et l'inspiration de l'utilisateur en tant qu'ordre de déclenchement. De ce fait, elles sont souvent plus pratiques, plus compactes et plus légères que les valves à énergie électrique.

Le document FR-A-1 550 319 considéré comme étant l'état de la technique la plus proche concerne un robinet détendeur à simple détente pour bouteille de gaz liquéfié comprenant un corps ayant une tubulure de sortie destinée à être raccordée à un appareil utilisateur et un manchon de raccordement emmanché sur un embout contenant une soupape, destiné à être mis en relation avec une bouteille de gaz liquide. Le robinet comprend des moyens de détente, agencés sur le passage interne de fluide et une manette emboîtée sur le corps de façon à pouvoir tourner librement. Une bille de positionnement est logée dans une alvéole du corps et est poussée par un ressort vers une gorge formée dans la manette. Une bille de verrouillage logée dans un trou du manchon est apte à coopérer avec alvéole prévue sur le manchon. Les billes de positionnement et de verrouillage définissant sensitivement par blocage de sa rotation des positions prédéfinies stables de la manette relativement au corps et empêchent le montage du robinet détendeur sur l'embout lorsque la manette est en position d'ouverture du robinet.

Le but de la présente invention est de proposer, d'une part, un équipement de distribution de gaz, en particulier d'oxygène médical, qui soit léger, pratique, bien adapté à la déambulation des patients, d'une conception compacte permettant d'optimiser le poids total de l'ensemble, de minimiser au maximum les efforts de connexion, de supprimer toute intervention sur des parties soumises à la haute pression et donc de limiter les risques afférents, ainsi que de proposer, d'autre part, un robinet à détendeur intégré qui soit amélioré au plan de la sécurité par rapport aux robinets détendeurs existants et qui puisse faire partie d'un tel équipement de déambulation, lorsqu'il est monté sur une petite bouteille de gaz, en particulier une bouteille d'oxygène médical.

La solution de l'invention est alors un ensemble robinet à détendeur intégré avec un corps principal comportant:
- un passage interne de gaz permettant de véhiculer du gaz entre un orifice d'entrée de gaz et un orifice de sortie de gaz,
- des moyens de détente de gaz agencés sur ledit passage interne de gaz entre lesdits orifice d'entrée de gaz et orifice de sortie de gaz, et
- un robinet de verrouillage servant à contrôler la libération du gaz et comprenant un organe d'actionnement rotatif, manoeuvrable par l'utilisateur, l'ensemble comprenant, en outre, des moyens de blocage agissant sur l'organe d'actionnement rotatif du robinet de verrouillage de manière à empêcher normalement toute rotation dudit l'organe d'actionnement, les moyens de blocage comprenant un ou plusieurs pièces mobiles venant coopérer avec l'organe d'actionnement de manière à empêcher sa rotation et la libération du gaz, la solution selon l'invention est caractérisée en ce que l'organe d'actionnement est centré sur un bossage du corps du robinet, ledit bossage portant, en outre, l'orifice de sortie de gaz permettant de distribuer le gaz et des moyens de connexion permettant le raccordement d'un appareil d'utilisation du gaz muni d'une interface d'entrée et de moyens de connexion complémentaires aptes à coopérer avec les moyens de connexion du bossage l'interface d'entrée dudit appareil d'utilisation du gaz étant conformée pour agir sur la au moins une pièce mobile des moyens de blocage pour libérer la rotation de l'organe d'actionnement, après raccordement de l'interface d'entrée de l'appareil d'utilisation du gaz sur l'interface de sortie du robinet.

Selon le cas, l'ensemble de l'invention peut comprendre l'une ou plusieurs des caractéristiques techniques suivantes :
- au moins une pièce mobile est repoussée par des moyens élastiques en direction de la bague de manière à venir se loger, au moins partiellement, dans au moins un évidement aménagé dans l'organe d'actionnement et dimensionné pour recevoir au moins une partie de ladite pièce mobile de manière à empêcher la rotation de l'organe d'actionnement lorsqu'une pièce mobile est au moins partiellement logée dans un évidement.
- l'organe d'actionnement est une bague rotative.
- le ou les moyens élastiques sont des ressorts.
- la ou les pièces mobiles sont des pions, des billes ou analogues.
- les moyens de détente de gaz comportent un premier étage de détente et un deuxième étage de détente agencés sur ledit passage interne de gaz, le deuxième étage de détente étant situé en aval du premier étage de détente.
- il comporte, en outre : une soupape à pression résiduelle, un manomètre permettant de visualiser la pression disponible dans la bouteille, un raccord de remplissage, un filtre, et/ou une soupape de sécurité permettant d'évacuer toute surpression éventuelle en cas de défaillance ou de rupture du clapet de première détente du premier étage de détente.
- il comporte, en outre, un moyen d'action instantané, activable par l'opérateur, agissant sur les moyens de détente du deuxième étage de détente de manière à augmenter instantanément la pression détendue et le débit de gaz délivré, durant le temps d'activation dudit moyen par l'opérateur, de préférence le moyen d'action instantané est un bouton venant comprimer le ressort de détente du piston du deuxième étage de détente.

L'invention porte aussi sur un équipement portatif de déambulation dont le poids est inférieur à 2 kg, comprenant une bouteille de gaz comprimé sur laquelle est monté un ensemble robinet à détendeur intégré selon l'invention, de préférence la bouteille de gaz contient de l'oxygène.

Selon le cas, l'équipement portatif de l'invention peut comprendre l'une ou plusieurs des caractéristiques techniques suivantes :
- il comprend, en outre, un appareil d'utilisation du gaz raccordé, via son interface d'entrée, à l'interface de sortie du robinet, ledit appareil d'utilisation du gaz comprenant des moyens de connexion complémentaires coopérant avec les moyens de connexion de l'interface de sortie du robinet et avec les moyens de blocage agissant sur l'organe d'actionnement de manière à autoriser la rotation de l'organe d'actionnement et le passage du gaz du robinet-détendeur vers l'appareil d'utilisation du gaz.
- l'appareil d'utilisation du gaz est choisi parmi les valves à la demande ou les débitmètres.
- il comporte un capotage de protection agencé de manière à protéger l'ensemble robinet à détendeur intégré, de préférence ledit capotage de protection est fixé sur le robinet

L'ensemble de déambulation de l'invention formé d'une petite bouteille d'oxygène comprimé sur laquelle est monté un mini robinet détendeur intégré selon l'invention va maintenant être décrit plus en détail à l'aide d'un exemple de réalisation, lequel est illustré sur les figures ci-annexées.

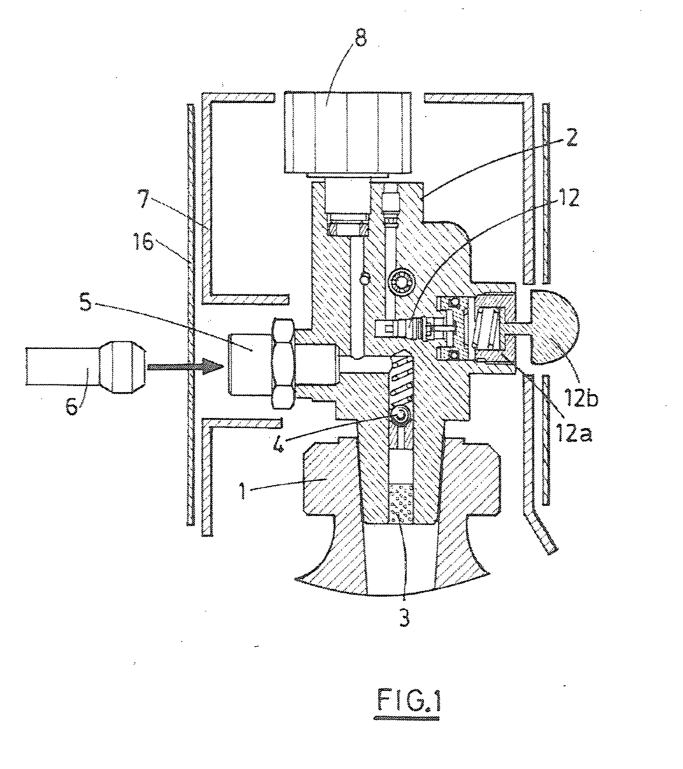

Dans l'exemple des figures 1 à 4, l'équipement de déambulation de l'invention muni du robinet détendeur 2 de l'invention est relié à une valve 14 à la demande équipée d'une lunette d'oxygénothérapie 15 ; toutefois, ce choix n'est pas exhaustif et la description ci-après reste globalement valable pour tout autre appareil de distribution de gaz, tel un débitmètre par exemple, équipé de l'interface spécifique décrite plus loin.

L'équipement portatif de déambulation de l'invention, illustré par les figures 1 à 4, forme un ensemble autonome pour la déambulation de proximité permettant de fournir un débit contrôlé d'oxygène à un patient, à chaque inspiration de l'utilisateur, par l'intermédiaire d'une valve 14 à la demande équipée d'une lunette d'oxygénothérapie 15.

L'oxygène est stocké sous forme de gaz comprimé dans une petite bouteille 1 de gaz sur laquelle est monté l'ensemble robinet-détendeur 2 de l'invention auquel vient se raccorder une valve 14 à la demande.

Le remplissage de la petite bouteille 1 en gaz comprimé à haute pression se fait au travers du raccord spécifique 5 du robinet détendeur 2, grâce à un connecteur externe 6.

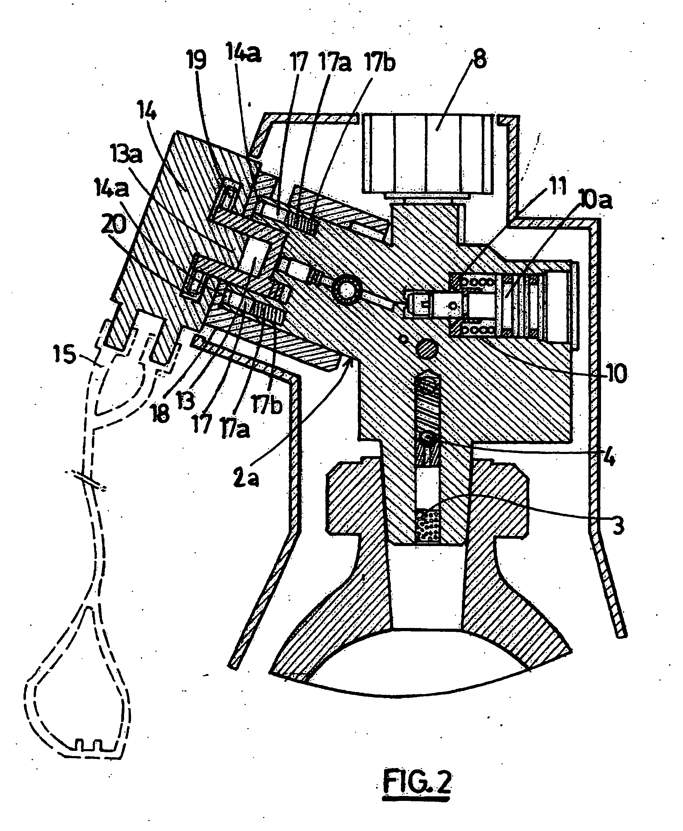

Sur la figure 1, on voit l'ensemble de déambulation de l'invention qui est composé ici d'une bouteille 1 de très petite taille, typiquement d'une hauteur de moins de 30 cm, pour gaz comprimé haute pression, en particulier de l'oxygène de qualité médicale, sur laquelle est monté l'ensemble robinet à détendeur intégré 2 de l'invention comportant un filtre 3 interne servant à protéger l'ensemble du robinet, un clapet de pression résiduelle 4, une prise ou entrée de rechargement 5 en gaz accessible par un raccord de remplissage 6 au travers d'un capotage de protection 7 pour protéger l'ensemble robinet-détendeur 2 contre les chocs, un manomètre 8 permettant de visualiser la pression disponible dans la bouteille, un robinet 9 d'isolement de la bouteille dont le fonctionnement est détaillé ci-après, des moyens de détente comprenant un premier étage de détente 10 sur la Figure 2, muni d'une soupape de sécurité 11 et un deuxième étage de détente 12.

Lesdits premier 10 et deuxième 12 étages de détente comprennent des organes de détente classiques, tels que clapets, sièges de clapets, moyens à ressort..., permettant d'effectuer une détente du gaz depuis sa pression haute, c'est-à-dire la pression du gaz en sortie de bouteille, par exemple 200 bar, jusqu'à sa pression basse, c'est-à-dire sa pression d'utilisation, par exemple 1 bar, après passage par une pression intermédiaire.

L'ensemble robinet-détendeur comprend également une interface de sortie 13 spécifique servant à la connexion de la valve à la demande 14, ladite connexion permettant le déverrouillage de l'organe rotatif 18 du robinet 9, c'est-à-dire que l'on ne peut pas ouvrir le robinet 9 sans y raccorder au préalable la valve 14, comme expliqué ci-après.

La lunette 15 d'oxygénothérapie est reliée à la sortie de la valve 14 à la demande de manière à alimenter le patient en oxygène dont la pression a été réduite dans les deux étages 10, 12 de détente. En effet, un tel système de réduction de la pression à double détente 10, 12 permet de garantir un niveau de débit constant quel que soit le niveau de remplissage de la bouteille.

Avantageusement, l'ensemble robinet-détendeur de l'invention comprend un moyen optionnel actionnable par l'utilisateur permettant d'augmenter momentanément le débit d'oxygène délivré subséquemment à son activation, par exemple un bouton 12b actionnable par pression digitale et permettant de comprimer le ressort de détente du piston du deuxième étage 12 de détente afin d'augmenter momentanément la pression détendue pendant le temps d'appui, dans le but d'obtenir une augmentation du débit d'oxygène adaptée aux efforts supplémentaires du patient.

Le robinet comporte par ailleurs une soupape de sécurité 11 permettant d'évacuer une surpression éventuelle en cas de défaillance du clapet de première détente du premier étage 10 de détente.

Plus spécifiquement, l'ensemble robinet détendeur 2 est doté d'une interface de sortie spécifique portant le robinet de verrouillage 9 commandant l'entrée et la sortie du gaz, ladite interface de sortie étant, en outre, destinée à recevoir un appareil 14 utilisant l'oxygène à pression réduite délivré par l'ensemble 2, tel qu'un débitmètre, une valve à la demande ou un outil d'ouverture nécessaire pour effectuer la purge du gaz de la bouteille,.

Selon l'invention, l'interface d'entrée de l'appareil 14 utilisant le gaz, c'est-à-dire sa prise de connexion, coopère avec l'interface de sortie de l'ensemble robinet-détendeur 2 de manière à libérer la rotation de l'organe 18 de manoeuvre rotatif, telle une bague ou volant, du robinet de verrouillage 9, comme illustré sur les Figures 2 à 4.

Ainsi, l'ouverture du robinet de verrouillage 9, c'est-à-dire la libération du gaz, ne peut se faire qu'une fois l'appareil d'utilisation 14 connecté sur le robinet-détendeur 2.

Autrement dit, l'appareil d'utilisation 14 comporte une interface d'entrée, faisant office de prise de connexion, complémentaire de l'interface de sortie spécifique du robinet détendeur 2, coopérant l'une avec l'autre, de manière à ne libérer le gaz que lorsqu'elles sont raccordées l'une à l'autre, grâce à la présence d'un robinet de verrouillage 9 dont l'organe 18 de manoeuvre n'est manoeuvrable qu'après raccordement adéquat de ces parties l'une à l'autre.

En fait, la mise en oeuvre d'un ensemble 2 de l'invention se fait comme suit.

Tout d'abord, l'utilisateur sélectionne une bouteille 1 pleine en vérifiant l'indication du manomètre 8, enlève le film de protection qui protége l'interface de sortie de l'ensemble robinet détendeur 2 prévue pour recevoir l'interface d'entrée de la valve à la demande 14.

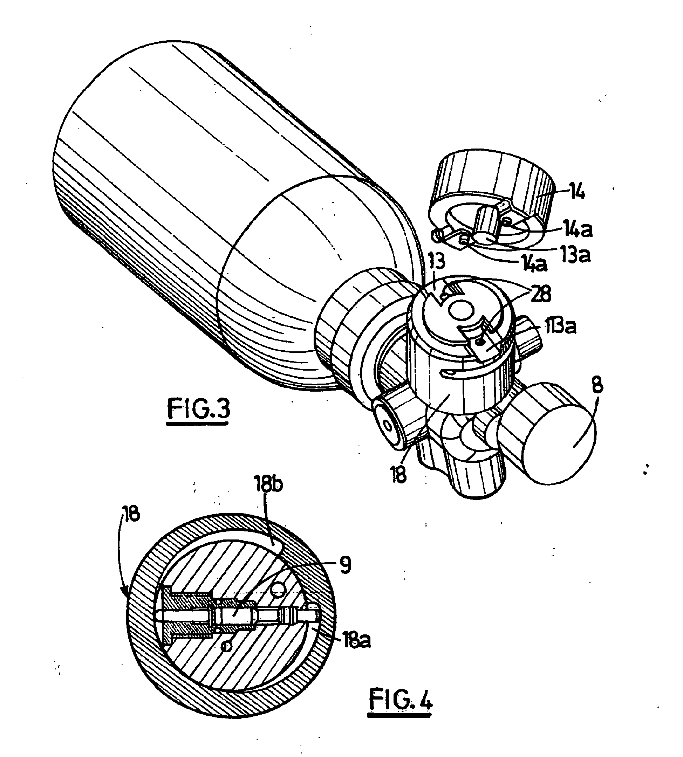

Comme montré sur la figure 3, il introduit ensuite l'interface de raccordement de la valve à la demande 14 dans l'orifice central de l'ensemble 13 muni du robinet de verrouillage 9, ce qui libère l'organe de manoeuvre 18 du robinet de verrouillage 9 et autorise alors la libération du gaz.

Plus précisément, le déverrouillage de la rotation de l'organe de manoeuvre 18 s'obtient par l'action en répulsion d'un ou plusieurs picots, ergots ou analogues 14a portés par la valve à la demande 14 sur un ou plusieurs pions 17, billes ou analogues de blocage, logés dans le corps de l'ensemble robinet-détendeur et agissant sur la bague de commande 18 du robinet de verrouillage 9.

En effet, pour empêcher toute rotation de l'organe de manoeuvre 18, encore appelé organe d'actionnement 18, lorsque aucun appareil 14 n'y est raccordé, sont prévus un ou plusieurs pions 17, billes ou analogues de blocage, chaque pion 17 étant mobile dans son logement 17b en faisant partiellement saillie hors dudit logement 17b sous l'effet d'une poussée élastique qu'exerce sur lui un moyen à ressort 17a situé entre ledit pion 17 et le fond du logement 17b où est inséré le pion 17, comme schématisé sur la figure 2.

La partie de chaque pion 17 faisant saillie hors du logement 17b vient se loger dans un évidement ou logement 28, de dimensionnement adapté, aménagé dans l'organe de manoeuvre 18, ce qui bloque la rotation dudit organe d'actionnement 18 formant bague autour du robinet 9.

Comme on le voit sur la figure 2 et la figure 3, les évidements ou logements 28 sont des perçages ou orifices qui traversent toute la paroi de la bague d'actionnement 18.

Par contre, lorsqu'un appareil 14 est raccordé à l'ensemble robinet-détendeur 2 de l'invention, les picots ou ergots 14a portés par l'interface d'entrée dudit appareil 14 viennent contre-agir sur des pions 17 complémentaires, dans un sens tendant à les dégager des orifices 28 de la bague 18, donc à les repousser vers leurs logements 17b, ce qui comprime les ressorts 17a, et permet de libérer la bague rotative 18 qui est normalement bloquée dans ces pions 17.

Laquelle bague 18 ainsi libérée peut alors être manoeuvrée en rotation par l'opérateur jusque dans sa position d'ouverture limitée par une butée et ce, afin d'ouvrir le robinet 9 et libérer le gaz, l'entraînement du robinet 9 se faisant de manière couplée à une rotation de la valve 14 autour de son axe. L'ensemble est alors prêt à délivrer du gaz.

Dès la rotation de la valve 14 jusqu'à la position "robinet ouvert", celle-ci ne peut plus être déconnectée.

En effet, les pions 19 passent dans la gorge 20 de l'interface de la valve 14. Cette dernière est donc prisonnière du système jusqu'à ce que l'utilisateur manoeuvre la valve 14 en position inverse jusqu'en butée.

Lorsque le robinet 9 est ouvert, c'est-à-dire après raccordement de l'appareil 14, le gaz arrive dans le détendeur de première détente composé d'un piston 10 et d'une soupape 11 pour être détendu depuis sa pression haute jusqu'à une pression plus basse, appelée pression intermédiaire ou pression moyenne.

Ensuite, le gaz détendu à la pression intermédiaire arrive sur le détendeur de seconde détente composé d'un clapet 12 et piston 12a où il est détendu depuis la pression moyenne jusqu'à basse pression, couramment appelée pression finale ou pression d'utilisation.

Toutefois, le niveau de pression finale peut à tout moment être augmenté par l'utilisateur grâce à l'appui sur un bouton 12b comprimant un peu plus le ressort de détente du deuxième étage de détente. Autrement dit, la possibilité de disposer, au niveau du second étage de détente 12, d'un système permettant d'augmenter momentanément le débit par simple pression sur un bouton 12a est une caractéristique optionnelle intéressante car cette augmentation de débit peut être commandée directement par le patient lui-même lorsqu'il en ressent le besoin, par exemple lorsqu'il effectue un effort plus important, notamment en montant une côte ou un escalier.

Dans tous les cas, la pression finale obtenue communique par le passage interne de gaz jusqu'à un logement 13 débouchant au niveau de l'orifice de sortie porté par l'interface de sortie, lequel logement 13 est prévu pour recevoir une partie de la valve 14 ou tout autre appareil devant y être raccordé.

Comme expliqué ci-avant, l'introduction de la valve 14 orientée dans le robinet au travers des évidements 113a permet de repousser les pions 17 en rappel sur des moyens élastiques 17a grâce à deux pions 14a solidaires de l'interface d'entrée de la valve 14, ce qui libère la rotation de la bague 18, celle-ci étant alors liée angulairement à la valve 14.

Lors de la rotation manuelle de la valve 14 des ergots 19 permettent de rendre l'interface de la valve 14 prisonnière de l'organe 18 d'actionnement du robinet 9, c'est-à-dire la bague 18.

La rotation de la valve 14 entraîne donc la bague 18, les rampes 18a, 18b agissent sur le tiroir 9 qui se déplace transversalement et permet l'ouverture ou la fermeture du robinet selon le sens de rotation de la valve.

La sortie de la valve 14 est reliée à une lunette d'oxygénothérapie 15 et lorsque le patient inspire, la valve à la demande se met en ouverture et donne le débit prescrit qui a été défini par un ajutage dans la valve lors de sa fabrication.

En outre, à l'intérieur du corps de l'ensemble robinet détendeur 2 est également préférentiellement incorporé un disque de rupture à double action, tel que décrit dans le document FR 0211318 ou le document US-A-4,706,698 destiné à pallier toute augmentation intempestive de pression due à une source intense de chaleur, ainsi qu'une soupape à pression résiduelle garantissant une pression minimale de vidange de la bouteille donc d'éviter, d'une part, toute rétro-pollution par des impuretés extérieures en fin d'utilisation, lorsque la bouteille est vide ou presque et, d'autre part, un rinçage lors du remplissage subséquent de la bouteille avec une nouvelle charge de gaz.

L'ensemble de l'invention est conditionné et prêt à l'emploi, soit individuellement, soit en paquet de plusieurs bouteilles, et est préférentiellement recouvert d'un film de protection 16 évitant qu'il ne soit sali durant le transport, par exemple de la couleur normalisée du gaz contenu dans la bouteille 1, et comportant toutes les indications légales sur la définition dudit gaz.

Les lunettes 15 respiratoires nasales et la valve à la demande 14 sont détenues par l'utilisateur patient qui ne s'en sépare jamais car le matériel est adapté pour un débit conforme à la prescription fournie par son médecin.

L'ensemble robinet détendeur/bouteille de l'invention, après utilisation de la totalité du gaz par le patient, est retourné chez le distributeur de gaz pour son remplissage en gaz. Une fois re-rempli, l'ensemble robinet détendeur/bouteille est soumis à une opération de filmage et emballage avant sa ré-expédition.

## Revendications

1. Ensemble robinet à détendeur intégré (2) avec un corps principal comportant:
- un passage interne de gaz permettant de véhiculer du gaz entre un orifice d'entrée de gaz et un orifice de sortie de gaz,
- des moyens de détente (10, 12) de gaz agencés sur ledit passage interne de gaz entre lesdits orifice d'entrée de gaz et orifice de sortie de gaz, et
- un robinet de verrouillage (9) servant à contrôler la libération du gaz et comprenant un organe d'actionnement (18) rotatif, manoeuvrable par l'ensemble l'utilisateur,
l'ensemble comprenant, en outre, des moyens de blocage (17) agissant sur l'organe d'actionnement (18) rotatif du robinet de verrouillage (9) de manière à empêcher normalement toute rotation dudit organe d'actionnement (18), les moyens de blocage (17) comprenant une ou plusieurs pièces mobiles venant coopérer avec l'organe d'actionnement (18) de manière à empêcher sa rotation et la libération du gaz,
**caractérisé en ce que** l'organe d'actionnement (18) est centré sur un bossage (2a) du corps dudit ensemble robinet (2), ledit bossage (2a) portant, en outre, l'orifice de sortie de gaz (13) permettant de distribuer le gaz et des moyens de connexion (19) permettant le raccordement d'un appareil d'utilisation du gaz (14) muni d'une interface d'entrée (13a) et de moyens de connexion complémentaires (20) aptes à coopérer avec les moyens de connexion (19) du bossage, l'interface d'entrée (13a) dudit appareil d'utilisation du gaz étant conformée pour contre-agir sur la au moins une pièce mobile (17) des moyens de blocage pour libérer la rotation de l'organe d'actionnement (18), après raccordement de l'interface d'entrée (13a) de l'appareil d'utilisation du gaz (14) sur l'interface de sortie dudit ensemble robinet (2).

2. Ensemble selon la revendication 1, **caractérisé en ce que** l'organe d'actionnement (18) est une bague rotative.

3. Ensemble selon la revendication 2, **caractérisé en ce qu'**au moins une pièce mobile (17) est repoussée par des moyens élastiques (17a) en direction de la bague (18) de manière à venir se loger, au moins partiellement, dans au moins un évidement (28) aménagé dans l'organe d'actionnement (18) et dimensionné pour recevoir au moins une partie de ladite pièce mobile (17) de manière à empêcher la rotation de l'organe d'actionnement (18) lorsqu'une pièce mobile (17) est au moins partiellement logée dans un évidement (28).

4. Ensemble selon la revendication 3, **caractérisé en ce que** le ou les moyens élastiques (17a) sont des ressorts.

5. Ensemble selon l'une des revendications 1 à 4, **caractérisée en ce que** la ou les pièces mobiles (17) sont des pions, des billes ou analogues.

6. Ensemble selon l'une des revendications 1 à 5, **caractérisé en ce que** les moyens de détente (10, 12) de gaz comportent un premier étage de détente (10) et un deuxième étage de détente (12) agencés sur ledit passage interne de gaz, le deuxième étage de détente (12) étant situé en aval du premier étage de détente (10).

7. Ensemble selon l'une des revendications 1 à 6, **caractérisé en ce qu'**il comporte, en outre :
- une soupape à pression résiduelle (4),
- un manomètre (8) permettant de visualiser la pression disponible dans la bouteille,
- un raccord de remplissage (5),
- un filtre (3), et/ou
- une soupape de sécurité (11) permettant d'évacuer toute surpression éventuelle en cas de défaillance ou de rupture du clapet de première détente du premier étage de détente (10).

8. Ensemble selon l'une des revendications 1 à 7, **caractérisé en ce qu'**il comporte, en outre, un moyen d'action instantané (12b), activable par l'opérateur, agissant sur les moyens de détente du deuxième étage de détente (12) de manière à augmenter instantanément la pression détendue et le débit de gaz délivré, durant le temps d'activation dudit moyen (12) par l'opérateur, de préférence le moyen d'action instantané est un bouton (12b) venant comprimer le ressort de détente du piston du deuxième étage de détente (12).

9. Equipement portatif de déambulation dont le poids est inférieur à 2 kg, comprenant une bouteille de gaz (1) comprimé sur laquelle est monté un ensemble robinet à détendeur intégré (2) selon l'une des revendications 1 à 8, de préférence la bouteille de gaz (1) contient de l'oxygène.

10. Equipement portatif selon la revendication 9, **caractérisé en ce qu'**il comprend, en outre, un appareil d'utilisation du gaz (14) raccordé, via son interface d'entrée (13a), à l'interface de sortie (13) dudit ensemble robinet (2), ledit appareil d'utilisation du gaz (14) comprenant des moyens de connexion complémentaires (20) coopérant avec les moyens de connexion (19) de l'interface de sortie (13) dudit ensemble robinet (2) et avec les moyens de blocage (17) agissant sur l'organe d'actionnement (18) de manière à autoriser la rotation de l'organe d'actionnement (18) et le passage du gaz dudit ensemble robinet (2) vers l'appareil d'utilisation du gaz (14).

11. Equipement portatif selon la revendication 10, **caractérisé en ce que** l'appareil d'utilisation du gaz (14) est choisi parmi les valves à la demande ou les débitmètres.

12. Equipement portatif selon la revendication 9, **caractérisé en ce qu'**il comporte un capotage de protection agencé de manière à protéger l'ensemble robinet à détendeur intégré, de préférence ledit capotage de protection est fixé sur ledit ensemble robinet (2).

## Claims

1. Valve unit with built-in pressure reducer (2) with a main body comprising:
- an internal gas passage for conveying gas between a gas inlet port and a gas outlet port,
- gas expansion means (10, 12) arranged on the said internal gas passage between the said gas inlet port and gas outlet port, and
- a locking tap (9) for controlling the release of the gas and comprising a rotary actuating member (18), manoeuvrable by the user,
the unit further comprising blocking means (17) acting on the rotary actuating member (18) of the locking tap (9) so as to normally prevent any rotation of the said actuating member (18), the blocking means (17) comprising one or more moving parts which cooperate with the actuating member (18) to prevent its rotation and the release of the gas,
**characterized in that** the actuating member (18) is centred on a boss (2a) of the body of the said valve unit (2), the said boss (2a) further containing the gas outlet port (13) for distributing the gas and connecting means (19) for connecting a gas-use apparatus (14) provided with an inlet interface (13a) and complementary connecting means (20) suitable for cooperating with the connecting means (19) of the boss, the inlet interface (13a) of the said gas-use apparatus being conformed to counteract on the at least one moving part (17) of the blocking means to liberate the rotation of the actuating member (18), after connection of the inlet interface (13a) of the gas-use apparatus (14) to the outlet interface of the said valve unit (2).

2. Unit according to Claim 1, **characterized in that** the actuating member (18) is a ring gauge.

3. Unit according to Claim 2, **characterized in that** at least one moving part (17) is pushed back by elastic means (17a) towards the ring (18) in order to be lodged, at least partially, in at least one recess (28) arranged in the actuating member (18) and dimensioned to accommodate at least part of the said moving part (17) to prevent the rotation of the actuating member (18) when a moving part (17) is at least partially lodged in a recess (28).

4. Unit according to Claim 3, **characterized in that** the elastic means (17a), of which there may be more than one, are springs.

5. Unit according to one of Claims 1 to 4, **characterized in that** the moving part or parts (17) are pins, balls or similar.

6. Unit according to one of Claims 1 to 5, **characterized in that** the gas expansion means (10, 12) comprise a first expansion stage (10) and a second expansion stage (12) arranged on the said internal gas passage, the second expansion stage (12) being located downstream of the first expansion stage (10).

7. Unit according to one of Claims 1 to 6, **characterized in that** it further comprises:
- a residual pressure valve (4),
- a pressure gauge (8) for visualizing the pressure available in the cylinder,
- a filling coupling (5),
- a filter (3), and/or
- a relief valve (11) for removing any overpressure in case of failure or of breakage of the first expansion check valve of the first expansion stage (10).

8. Unit according to one of Claims 1 to 7, **characterized in that** it further comprises instantaneous action means (12b), which can be activated by the operator, acting on the expansion means of the second expansion stage (12), in order to instantaneously increase the expanded pressure and the flow rate of gas delivered, during the time of activation of the said means (12) by the operator, preferably the instantaneous action means is a knob (12b) which compresses the expansion spring of the piston of the second expansion stage (12).

9. Portable travelling equipment having a weight lower than 2 kg, comprising a compressed-gas cylinder (1) on which a valve unit with built-in pressure reducer (2) is mounted according to one of Claims 1 to 8, preferably the gas cylinder (1) contains oxygen.

10. Portable equipment according to Claim 9, **characterized in that** it further comprises a gas-use apparatus (14) connected, via its inlet interface (13a), to the outlet interface (13) of the said valve unit (2), the said gas-use apparatus (14) comprising complementary connecting means (20) cooperating with the connecting means (19) of the outlet interface (13) of the said valve unit (2) and with the blocking means (17) acting on the actuating member (18) in order to allow the rotation of the actuating member (18) and the passage of the gas from the said valve unit (2) to the gas-use apparatus (14).

11. Portable equipment according to Claim 10, **characterized in that** the gas-use apparatus (14) is selected from demand valves or flowmeters.

12. Portable equipment according to Claim 9, **characterized in that** it comprises a protective cover arranged in order to protect the valve unit with built-in pressure reducer, preferably the said protective cover is fixed to the said valve unit (2).

## Patentansprüche

1. Hahneinheit mit integriertem Entspannungsventil (2) mit einem Hauptkörper, der Folgendes aufweist:
- eine interne Gaspassage, die es dem Gas erlaubt, zwischen einer Gaseinlassöffnung und einer Gasauslassöffnung zu zirkulieren,
- Gasentspannungsmittel (10, 12), die auf der internen Gaspassage zwischen der Gaseinlassöffnung und der Gasauslassöffnung angeordnet sind, und
- ein Absperrhahn (9), der dazu dient, das Freigeben des Gases zu steuern, und der ein Drehstellglied (18) aufweist, das vom Benutzer bedient werden kann,
wobei die Einheit ferner Sperrmittel (17) aufweist, die auf das Drehstellglied (18) des Absperrhahns (9) derart einwirken, dass normalerweise jedes Drehen des Stellglieds (18) verhindert wird, wobei die Sperrmittel (17) einen oder mehrere bewegliche Teile aufweisen, die mit dem Stellglied (18) derart zusammenwirken, dass sie sein Drehen und das Freigeben des Gases verhindern,
**dadurch gekennzeichnet, dass** das Stellglied (18) auf einem Höcker (2a) des Körpers der Hahneinheit (2) zentriert ist, wobei der Höcker (2a) ferner die Gasauslassöffnung (13) trägt, die es erlaubt, das Gas zu verteilen, sowie Verbindungsmittel (19), die das Anschließen eines Geräts (14), das Gas verwendet, erlauben, versehen mit einer Einlassschnittstelle (13a), und ergänzenden Verbindungsmitteln (20), die mit den Verbindungsmitteln (19) des Höckers zusammenwirken können, wobei die Einlassschnittstelle (13a) des Gas verwendenden Geräts ausgebildet ist, um auf den mindestens einen beweglichen Teil (17) der Sperrmittel entgegenzuwirken, um das Drehen des Stellglieds (18) freizugeben, nachdem die Einlassschnittstelle (13a) des Gas verwendenden Geräts (14) an der Auslassschnittstelle der Hahneinheit (2) angeschlossen wurde.

2. Einheit nach Anspruch 1, **dadurch gekennzeichnet, dass** das Stellglied (18) ein Drehring ist.

3. Einheit nach Anspruch 2, **dadurch gekennzeichnet, dass** mindestens ein beweglicher Teil (17) von elastischen Mitteln (17a) in Richtung des Rings (18) derart zurückgeschoben wird, dass er sich zumindest teilweise in mindestens eine Aussparung (28) fügt, die in dem Stellglied (18) eingerichtet und bemessen ist, um zumindest einen Teil des beweglichen Teils (17) derart aufzunehmen, dass das Drehen des Stellglieds (18) verhindert wird, wenn ein beweglicher Teil (17) zumindest teilweise in einer Aussparung (28) aufgenommen ist.

4. Einheit nach Anspruch 3, **dadurch gekennzeichnet, dass** das oder die elastischen Mittel (17a) Federn sind.

5. Einheit nach einem der Ansprüche 1 bis 4, **dadurch gekennzeichnet, dass** der oder die beweglichen Teile (17) Klötze, Kugeln oder Ähnliches sind.

6. Einheit nach einem der Ansprüche 1 bis 5, **dadurch gekennzeichnet, dass** die Gasentspannungsmittel (10, 12) eine erste Entspannungsstufe (10) und eine zweite Entspannungsstufe (12) aufweisen, die auf der internen Gaspassage eingerichtet sind, wobei die zweite Entspannungsstufe (12) stromabwärts der ersten Entspannungsstufe (10) liegt.

7. Einheit nach einem der Ansprüche 1 bis 6, **dadurch gekennzeichnet, dass** sie ferner Folgendes aufweist:
- ein Restdruckventil (4),
- einen Druckmesser (8), der das Anzeigen des in der Flasche verfügbaren Drucks erlaubt,
- einen Füllanschluss (5),
- ein Filter (3), und/oder
- ein Sicherheitsventil (11), das es erlaubt, jeden eventuellen Überdruck bei einem Versagen oder Bruch des ersten Entspannungsventils der ersten Entspannungsstufe (10) abzulassen.

8. Einheit nach einem der Ansprüche 1 bis 7, **dadurch gekennzeichnet, dass** sie ferner ein Sofortbetätigungsmittel (12b) aufweist, das von dem Bediener betätigt werden kann, das auf die Entspannungsmittel der zweiten Entspannungsstufe (12) derart einwirkt, dass der entspannte Druck und der gelieferte Gasdurchsatz während der Zeit des Betätigens des Mittels (12) durch den Bediener sofort erhöht werden, wobei das Sofortbetätigungsmittel vorzugsweise ein Knopf (12b) ist, der die Entspannungsfeder des Kolbens der zweiten Entspannungsstufe (12) zusammendrückt.

9. Tragbare Gehausstattung, deren Gewicht kleiner ist als 2 kg, die eine Druckgasflasche (1) aufweist, auf der eine Hahneinheit mit integriertem Entspannungsventil (2) nach einem der Ansprüche 1 bis 8 montiert ist, wobei die Gasflasche (1) vorzugsweise Sauerstoff enthält.

10. Tragbare Ausstattung nach Anspruch 9, **dadurch gekennzeichnet, dass** sie ferner ein Gas verwendendes Gerät (14) aufweist, das über seine Einlassschnittstelle (13a) mit der Auslassschnittstelle (13) der Hahneinheit (2) verbunden ist, wobei das Gas verwendende Gerät (14) ergänzende Verbindungsmittel (20) aufweist, die mit den Verbindungsmitteln (19) der Auslassschnittstelle (13) der Hahneinheit (2) und mit den Sperrmitteln (17) zusammenwirken, die auf das Stellglied (18) derart einwirken, dass das Drehen des Stellglieds (18) und das Durchgehen des Gases der Hahneinheit (2) zu dem Gas verwendenden Gerät (14) gestattet wird.

11. Tragbare Ausstattung nach Anspruch 10, **dadurch gekennzeichnet, dass** das Gas verwendende Gerät (14) aus den Ventilen auf Anfrage oder aus den Durchflussmessern ausgewählt ist.

12. Tragbare Ausstattung nach Anspruch 9, **dadurch gekennzeichnet, dass** sie eine Schutzverkleidung aufweist, die derart angeordnet ist, dass sie die Hahneinheit mit integriertem Entspannungsventil schützt, wobei die Schutzverkleidung vorzugsweise auf der Hahneinheit (2) befestigt ist.
